(19) Europäisches Patentamt
European Patent Office
Office européen des brevets

(11) **EP 2 560 743 B1**

(12) **EUROPEAN PATENT SPECIFICATION**

(45) Date of publication and mention
of the grant of the patent:
**17.07.2019 Bulletin 2019/29**

(21) Application number: **10768807.9**

(22) Date of filing: **30.09.2010**

(51) Int Cl.:
**B01D 61/12** *(2006.01)*          **B01D 65/02** *(2006.01)*
**C02F 1/44** *(2006.01)*

(86) International application number:
**PCT/IB2010/002472**

(87) International publication number:
**WO 2011/132016 (27.10.2011 Gazette 2011/43)**

(54) **A METHOD AND SYSTEM FOR AN OPTIMIZED MEMBRANE CLEANING PROCESS**

VERFAHREN UND SYSTEM FÜR EIN OPTIMIERTES MEMBRANREINIGUNGSVERFAHREN

PROCÉDÉ ET SYSTÈME VISANT À OPTIMISER LE PROCESSUS DE NETTOYAGE D'UNE MEMBRANE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **19.04.2010 IN 1087CH2010**

(43) Date of publication of application:
**27.02.2013 Bulletin 2013/09**

(73) Proprietor: **ABB Research Ltd.**
**8050 Zürich (CH)**

(72) Inventors:
• **SUBBIAH, Senthilmurugan**
**628503 Kovilpatti (IN)**
• **SRINIVAS, Mekapati**
**522002 Arundelpet (IN)**
• **BHUTANI, Naveen**
**110085 New Delhi (IN)**

(74) Representative: **Zimmermann & Partner**
**Patentanwälte mbB**
**Postfach 330 920**
**80069 München (DE)**

(56) References cited:
EP-A1- 1 952 879          WO-A1-96/28236
WO-A1-2009/083670          WO-A2-2008/120978
US-A- 6 161 435          US-A1- 2008 099 399

• ROTH E ET AL: "Sodium chloride stimulus-response experiments in spiral wound reverse osmosis membranes: a new method to detect fouling", DESALINATION, ELSEVIER, AMSTERDAM, NL, vol. 121, no. 2, 12 March 1999 (1999-03-12), pages 183-193, XP004222886, ISSN: 0011-9164, DOI: DOI:10.1016/S0011-9164(99)00019-3

**Description**

**FIELD OF THE INVENTION**

The invention related to the field of reverse osmosis separation process used for desalination and waste water reuse process. More particularly, the invention relates to a method and system for estimating the effectiveness of the membrane cleaning.

**BACKGROUND OF THE INVENTION**

The reverse osmosis (RO) separation process is becoming increasingly important in the last two decades for desalination and waste water reuse process. RO process is aimed at replacing the conventional energy inefficient processes namely, thermal process & chemical process. This was possible after (i) discovering low pressure and high rejection membrane at lower cost and (ii) integration of energy recovery device (ERD) for recovering energy from reject stream. Even though, membrane separation processes are proved to be energy efficient than the conventional process, the membrane separation has its own demerits such as membrane fouling (deposition of unwanted material at membrane surface due to concentration polarization) i.e. the accumulation of solute molecules near the membrane surface. These materials can be either biological or chemical in nature resulting in bio-fouling or chemical fouling, respectively. As a result, membrane separation process becomes inefficient over a period of operation due to the decrease in production flow rate because of continuous fouling at membrane surface.

In general the RO trains are operated at recommended feed pressure and feed flow rate given by membrane operators, but in real system the optimal operating condition such as feed pressure & flow rate will be changing with respect to membrane operating condition. To overcome this issue, Membrane Performance tool is available to estimate optimal operating conditions for controling membrane fouling condition.

Although the membranes can be operated at their optimal operating conditions, the fouling at membrane surface cannot be avoided in membrane separation process. Therefore the chemical cleaning and membrane replacement are inherent activities for all membrane separation processes. Presently the due time for membrane replacement and chemical cleaning are suggested by either membrane expert (consultant) or membrane manufactures.

In order to minimize membrane fouling in RO process, the feed water to membrane is treated continuously with fouling control chemicals such as antiscalants. Though antiscalants dissolve the substances accumulated near the membrane surface and reduce the rate of fouling, the high dosage of antiscalants leads to increase in RO membrane degradation. Therefore, controlled addition of antiscalants to achieve controlled membrane fouling leading to minimal membrane degradation and lower chemical consumption is desired.

Also membrane cleaning chemicals are added to clean the membrane at certain flow rate and concentration as suggested by the membrane manufacturer. Optimizing the chemical flow rate and cleaning cycle based on the current membrane fouling state will reduce the cost of chemicals. This will also help in reducing the production off time due to cleaning and hence increases the RO permeate production.

The membrane fouling / cleaning is poorly understood due to lack of physical understanding about interaction between (i) fouling material and membrane, (ii) among fouling materials, (iii) fouling material and cleaning chemicals, and (iv) between membrane and cleaning chemicals. Since the cleaning phenomena is not well understood, the traditional practice is to keep membrane soaked in cleaning chemicals for a fixed period of time and then bring it back to operation.

Current practice of membrane cleaning is based on recommendations from membrane manufacturers which may consume more cleaning chemicals since the recommendations are given based on feed water quality, and are not based on severity of fouling. In addition, these chemicals are also quite costly. Membrane cleaning process is not well automated and there is an ample opportunity to develop an advanced tool for estimating effectiveness of the membrane cleaning and optimizing the cleaning operation.

The membrane cleaning chemistry and its hydrodynamics are vital in deciding the effectiveness of membrane cleaning. However, it is very difficult to represent these processes mathematically due to their complex nature. Therefore, it requires a simple alternative method to identify the effectiveness of the membrane cleaning.

US 6161435 discloses that the fouling state of a polymeric membrane within the high pressure housing of a spiral wound or a hollow fiber membrane module is determined. An ultra-sonic transducer positioned with its emitting face in physical engagement with the outer surface of the housing is pulse energized by a pulser/receiver device. A membrane echo signal is detected by a receiver of the pulser/receiver device. A reference echo signal indicative of a fouled or an unfouled state of the membrane is compared to the echo signal to determine the membrane fouling state. The echo to reference comparing step can be based upon comparing amplitude domain signals, comparing time-domain signals, comparing combinations of amplitude domain and time-domain signals, and comparing transformations of amplitude domain and time-domain signals. A clean or a fouled reference echo can be provided from a clean or a fouled membrane and then stored for use during a liquid separation process, or a clean reference echo signal can be obtained on-line from a second transducer whose echo signal is derived from an area of the membrane known to remain relatively unfouled during the liquid separation process, or a clean or fouled reference echo signal can be provided for later use during a cleaning process or during a liquid separation process. Multiple transducers and a switching network can sample the fouling state at different positions within the membrane module.

WO 2009/083670 discloses an advanced control method for a membrane filtration unit, applied to the treatment of an effluent, employing microcoagulation on a membrane, which consists in injecting, upstream of the membrane, a dose of coagulation reactant(s) 30 to 80 times below the dose (X) making the zeta potential of the effluent zero, in which method: quantities defining the quality of the effluent to be treated and quantities defining the state of membrane clogging are measured as input variables; the operating point of the microcoagulation process is located on the basis of the results of the above measurements; thresholds for the input variables are determined, the microcoagulation having to be initiated when said thresholds are violated; and the coagulation reactant(s) is(are) injected depending on the results of the measurements and on the comparison of the input variables with the respective thresholds.

WO 2008/120978 discloses a method for the filtration of a fluid was developed. The method aims to apply a certain preferred setting of one or more process parameters (e.g. a minimal concentration of coagulants) while maintaining desirable process performance by regulating the initial filtration resistance. This is achieved by a feedback controller. It was found that the method performs well; adaptation to changing conditions is achieved adequately and sufficiently fast. Applying the invention on in-line coagulation during membrane filtration has shown, that the initial resistance of the last filtration before the chemical cleaning phase can be controlled within an accuracy of approximately 3% (of the total resistance) or 9% (of the fouling resistance). Compared to the current dosing strategy, a significant reduction in coagulant consumption can be achieved.

ROTH E ET AL. "Sodium chloride stimulus-response experiments in spiral wound reverse osmosis membranes: a new method to detect fouling", DESALINATION, ELSEVIER, AMSTERDAM, NL, vol. 121, no. 2, 12 March 1999, pages 183-193, XP004222886 discloses that Fouling is generally described in terms of salt rejection and permeation flow, but these data seem to evolve very slowly, and when they reach a dramatic level, fouling is irreversible. We propose a method to determine the state of the wear of membranes by analyzing sodium chloride stimulus-response experiments. Indeed, it turns out that the shape of the distribution (RTD) of sodium chloride in the permeate flow of the membrane reveals the solute permeation mechanisms for used membranes. For new membranes the distribution of sodium chloride collected in the permeate side as well in the rejection side is unimodal. For fouled membranes we note a singular distribution form with the presence of several modes. The existence of a salt leakage peak, as well as an earlier detection of salt for all the fouled membranes, give evidence of the membrane structure modification. The intensive use of the membranes might have created an enlargement of the pore sizes; salt and solvent permeabilities are improved as well. It turns out that each permeate side sodium chloride distribution can be fitted by a weighted average of Gaussian distributions, the new membrane RTD and the shifted new membrane RTD. The coefficients of this average give us the fraction of the membrane which is enlarged, hampered by the deposited layer and not modified.

EP 1952879 discloses a large scale membrane separating installation wherein a cleaning chemical liquid flows to membrane units through a header and branch pipes. A cleaning chemical liquid distribution unit comprises the header and the branch pipes having a diameter smaller than that of the header. The cleaning chemical liquid distribution unit comprises a pipeline configuration uniformly distributing the cleaning chemical liquid supplied to the membrane units.

By estimating the effectiveness of the membrane cleaning, the cleaning chemical consumption and the plant down time can be minimized.

As can be inferred from the above discussion, the membrane cleaning process is time consuming and not optimal due to excessive use of chemicals. This invention is aimed to develop a method and system for optimization of membrane cleaning process

## SUMMARY

It is therefore an objective of the invention to optimize membrane cleaning process to provide automatic solution and cost savings by minimizing plant down time and optimal use of antiscalant cleaning chemicals for membrane cleaning. This objective is achieved by a using a method and a system according to the claims 1 and claim 6. Further preferred embodiments are evident from the dependent patent claims.

According to the invention, a method for managing reverse osmosis membrane cleaning process in a plant performing desalination or waste water reuse by operating the reverse osmosis membrane cleaning process for a controlled time for cleaning and with a controlled value of chemical concentration in a chemical liquor prepared for cleaning the membrane, the method comprises of the steps to:

a) Estimate fouling status of the membrane as defined in claim 1, and

b) Determine the controlled value of chemical concentration needed in the chemical liquor and the controlled time needed for cleaning based on the fouling status of the membrane, wherein the chemical liquor is recirculated through the fouled RO membrane during the cleaning time without regular feed input.

The value of chemical concentration and time needed for cleaning based on the fouling status of the membrane are determined using optimization techniques for cost effective and efficient operation of the plant.

The system for reverse osmosis managing membrane cleaning process in a plant performing desalination or waste water treatment by operating the reverse osmosis membrane cleaning process for a controlled time for cleaning and with a controlled value of cleaning chemical concentration in chemical liquor prepared for cleaning the membrane is provided. The system comprises of:

a) A membrane performance tool to obtain the membrane fouling status
b) One or more sensors to obtain salt concentration information in the chemical liquor
c) An automation block to administer concentration of cleaning chemical in the chemical liquor

The membrane performance tool is based on mathematical or data model, wherein the model utilizes formulations based on physical phenomenon or/and plant parameters including statistical models for computing/estimating membrane fouling status.

In a preferred variant of the invention, in the method for managing membrane cleaning process, the time needed for cleaning is determined using a function for concentration of salts in the chemical liquor that is obtained with Residence Time Distribution studies.

According to the invention, in the system for managing membrane cleaning process, the automation block used to administer addition of fresh chemical to the chemical liquor has an optimizer to compute optimal value of chemicals and optimal time needed for cleaning.

In yet another preferred variant of the invention, in the system for managing membrane cleaning process, the automation block administers addition of fresh chemical to the chemical liquor through one or more control valves controlling the flow of circulated chemical liquor and the flow of fresh chemical into the chemical liquor.

## BRIEF DESCRIPTION OF THE DRAWINGS

The subject matter of the invention will be explained in more detail in the following text with reference to preferred exemplary embodiments which are illustrated in the attached drawings, in which:

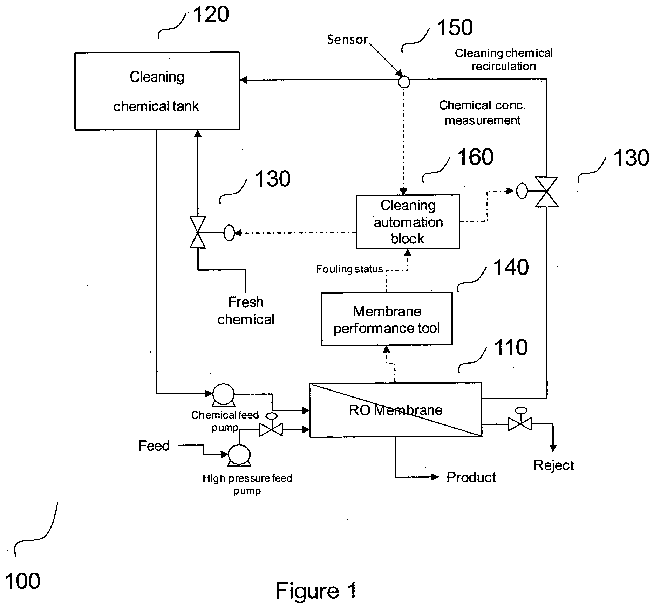

Figure 1 schematically shows the RO membrane cleaning system;
Figure 2 illustrates the cleaning reaction kinetics; and
Figure 3 illustrates the architecture of the cleaning automation block

The reference symbols used in the drawings, and their meanings, are listed in summary form in the list of reference symbols. In principle, identical parts are provided with the same reference symbols in the figures.

## DETAILED DESCRIPTION

It should be observed that method steps and system components have been represented by conventional symbols in the figures, showing only specific details that are relevant for an understanding of the present disclosure. In the present disclosure, the method steps are used to distinguish one entity (steps) from another entity, without necessarily implying any specific order among the method steps. Further, details that may be readily apparent to person ordinarily skilled in the art may not have been disclosed and a mention of a term in singular word form (eg cleaning chemical, sensor etc) are intended to also include plurallel word form or the variety generally associated with the term in the art (eg variety/plurality of cleaning chemicals, multiple sensors used in measurement etc).

Embodiments of the present disclosure provide a method and system for estimating effectiveness of membrance cleaning with use of estimation block and optimizing chemical comsumption to improve plant down time.

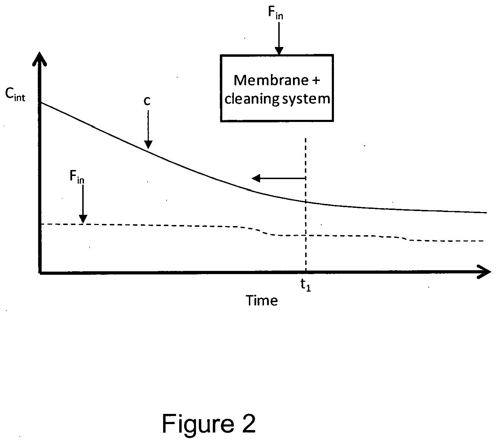

The membrane chemical cleaning system 100 is shown in Figure 2. The membrane chemical cleaning system 100 has a RO membrane 110 that is being cleaned with a cleaning chemical solution and various system components including cleaning chemical tank 120, valves 130, membrane performance measurement tool 140, one or more sensors 150 to measure chemical concentration and cleaning automation block 160 to control the process of cleaning and manage usage of the cleaning chemical.

The cleaning chemical is stored in cleaning chemical tank 120 and it is re-circulated through the fouled RO membrane system 110. During this time there is no regular feed input to the membrane system. The output cleaning chemical from the membrane 110 is again fed to the cleaning chemical tank 120 for recirculation. The concentration of chemical will decrease due to the chemical reaction between cleaning chemical and organic/inorganic salts deposited over the membrane surface. The process temporality is represented in figure 2. To maintain the cleaning chemical concentration in the cleaning chemical tank, additional fresh cleaning chemical is added to the system so as maintain is added to the system so as maintain favorable chemical reaction rate. The fresh chemical addition and the chemical recirculation are controlled by the cleaning automation block 160.

The concentration of cleaning chemical in membrane cleaning system is estimated from mass balance and reaction kinetic equations (1- 3) as given below

$$\frac{dV}{dt} = F_{in} \tag{1}$$

$$\frac{dVc}{dt} = F_{in}c_{in} + S_m r_c \tag{2}$$

Kinetic equation for reaction rate

$$r_c = -k_c c^a \tag{3}$$

The equations for initial conditions are as follows:

$$c = c_{\text{int}} \tag{4}$$

$$V = V_{\text{int}} \tag{5}$$

Where,

V = Total cleaning chemical volume, $m^3$
$F_{in}$ = Inlet cleaning chemical flow rate, $m^3/s$
c= Cleaning chemical concentration at membrane system, $kg/m^3$
$c_{in}$ =inlet cleaning chemical concentration, $kg/m^3$
$S_m$ = membrane surface area, $m^2$
$r_c$ = rate of cleaning chemical reaction, $kg/m^2$ s
$k_c$ =reaction rate constant, $(kg/m^2 \text{ s}) (kg/m^3)^{-a}$
a = reaction order, (-)
$c_{int}$ =initial concentration of cleaning chemical, $kg/m^3$
$V_{int}$ =initial cleaning chemical volume, $m^3$

The fouling state of the membrane is represented in terms of Hydrodynamic permeability (A) and Solute permeability (B). The temporal behavior of fouling in the membrane is modeled with the following equations:

$$\frac{dx}{dt} = F_{in}(x - x_\infty) + r_c \tag{6}$$

The initial condition is given by

$$x(0) = x_0 \tag{7}$$

where,

x = Fouling state of the membrane which could be A and B

$x_\infty$ = Irreversibile fouling state of the membrane which cannot be restored by chemical cleaning

$x_0$ = Initial fouling state of the membrane which could be obtained from the advanced membrane fouling monitoring solution

The membrane performance tool 140 is either based using an ultra sound sensor to measure fouling or based on a model for fouling or any other method that provides fouling status. The model parameters may be one or more foulding parameters including hydrodynamic permeability, solute permeability, reflection coefficient etc. In addition, the model may use plant parameters such as feed pressure, reject water flow rate, product water flow rate, product water total dissolved solids for estimating fouling status (extent of fouling). The fouling status is used as an input for determining the optimal chemical usage by the cleaning automation block 160.

The cleaning automation block consists of a mathemical model that makes use of measured plant data from the plant control system or other measurement system interfaced with the cleaning automation block to provide directly measured data or data that is estimated based on one or more measured parameters related to the membrance performance or process of chemical cleaning.

In an exemplary embodiment, the extent of fouling in membrane is estimated using the advanced membrane fouling monitoring solution in the following ways (i) by estimating the current fouling parameters from membrane model with the use of online plant measurements and (ii) by comparing the current fouling parameters with those of earlier cleaning cycles to estimate the membrane degradation right from the start of membrane operation. With this information, the approximate dosage for membrane cleaning chemicals is estimated and the fouled membrane can be initially fed with the estimated amount of chemicals.

During the membrane cleaning process, the salts deposited over the membrane are dissolved in re-circulating liquor and its concentration is to be measured by using suitable sensors (for example sensors like ion selective electrode that measures calcium and sulphate). The model for estimation relies on data from Residence Time Distribution (RTD) studies performed for chemicals with various concentration used for cleaning of membrane and the status of fouling monitored during the studies. The probability distribution functions is thus obtained through the RTD studies. It gives the amount of time the cleaning chemical needs to be circulated in the membrane chamber for effective cleaning and it is a function of the cleaning chemical concentration in membrane chamber. The estimate of the time may be based on a suitable descriptive statistical parameter (example 85 percentile value) such as cleaning chemical concentration.

At the begining of the process of cleaning, the concentration of the dissolved salts measured at cleaning chemical recirculation path is expected to increase in the chemical liquor as a result of chemical interaction with the fouled membrane. The chemical concentration decreases and reaches an asymptotic value at end of the cleaning. The end time is determined from the RTD data for a particular concentration of chemical and the residue in the membrane (i.e its fouling status). During the process of cleaning, fresh chemical is added in multiple steps to the circulating liquor to increase the rate of cleaning reaction and reduce the time taken for cleaning if the chemical is added in a controlled manner. Therefore, it is desired to optimally balance the addition of fresh chemical and the time for cleaning (down time for the plant) and this function is also carried out by the cleaning automation block 160.

The goal of optimization is to minimize the cleaning chemical consumption and cleaning duration subjected to constraints such as maximum limit on chemical concentration recommended by membrane supplier.

The objective function for optimization is

$$obj = \min_{F_{in}, c_{in}, Q_{in}, t_1}\left\{w_1 * (t_1 - t_m) * Q_{\Delta c} * C_p + w_2 * \sum_{t_i=0}^{t_1}(F_{in} * t_i * C_c)\right\}$$

(8)

Subjected to constraint

$$c_{int} \leq c_{limit}$$

(9)

$$c \leq c_{limit}$$

(10)

Where,

$t_m$ = membrane cleaning time as suggested by membrane manufacture, hr

$Q_{\Delta t}$ = permeate production rate in the time ($t_1 - t_m$), m$^3$/hr

$C_p$ = cost per m$^3$ of permeate water, \$

$C_c$ = cost per m$^3$ of chemical, \$

$t_1 = t_{at\frac{dc}{dt}\approx 0}$ i.e. the time at which the cleaning chemical concentration become asymptotic with respect to time and no further reaction occurs between cleaning chemical and scale deposited over the membrane surface.

$w_1$, $w_2$ = weight factor

$C_{limit}$ = maximum chemical concentration recommended by membrane supplier (used as constraint).

($t_1 - t_m$) is always maintained as a positive number i.e. absolute number is taken in for the calculations.

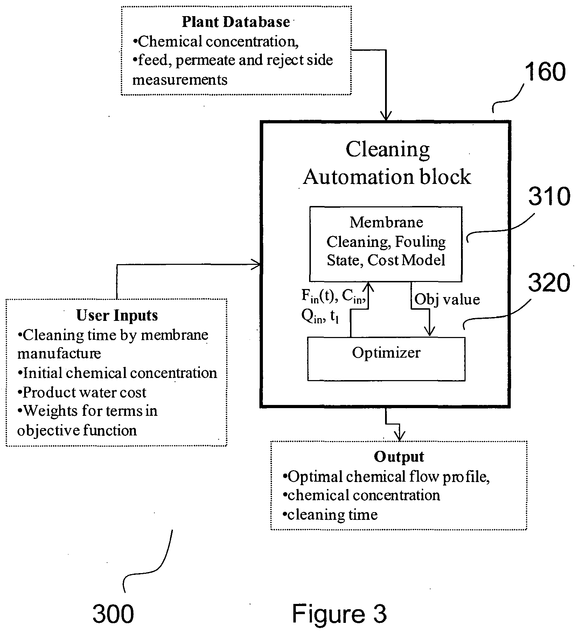

The control strategy is formulated with the optimization objective to find the optimal profiles for cleaning chemical flux and its concentration as a function of time, while minimizing the cleaning cost and cleaning time. As shown in Figure 3, the architecture 300 of cleaning automation block 160 consists of (i) models for membrane cleaning (RTD model), fouling state and cost model based on chemical cleaning (310) and (ii) optimizer for minimizing cleaning chemical consumption and cleaning duration (320). The proposed solution methodology takes into account the current fouling state of the membrane (refer eq. 7) obtained from the advanced membrane fouling monitoring solution to come up with optimal solution for chemical cleaning. The solution may be implemented through flow ratio control for the cleaning chemical liquor controlling the addition of chemical in the liquor based on measurement of salt concentration in the liquor.

The salt concentration data, fouling status data from the components as described above for the membrance cleaning system 100 and also has information about cost of chemicals, cost of plant down time where the cleaning time and fresh chemical addition is estimated from the RTD model present with the cleaning automation block 160. The cost information related to chemicals and plant down time is provided by users and available in the system as illustrated in Figure 3. With these data, the objective function is minimized to achieve optimal values for fresh chemical addition to achieve minimal cleaning time (plant down time). The optimal values are used as the set point in the regulatory control (Eg ratio control) deployed for the membrane cleaning system 100.

## Claims

1. A method for managing reverse osmosis (RO) membrane cleaning process in a plant performing desalination or waste water reuse by operating the reverse osmosis membrane cleaning process for a controlled time for cleaning and with a controlled value of chemical concentration in a chemical liquor prepared for cleaning a RO membrane, the method comprising of:

   a) Estimating fouling status of the RO membrane, wherein estimating the fouling status of the RO membrane is performed using a mathematical or data model based on physical phenomenon or/and plant parameters; and
   b) Determining the controlled value of chemical concentration and the controlled time needed for cleaning based on the fouling status of the RO membrane, wherein the value of chemicals concentration and time needed for cleaning based on the fouling status of the RO membrane are determined using optimization techniques for cost effective and efficient operation of the plant;

   wherein the chemical liquor is recirculated through the fouled RO membrane during the cleaning time without regular feed input.

2. The method for managing membrane cleaning process as claimed in Claim 1, wherein the controlled value of chemical concentration is administered to provide optimal use of chemicals and optimal time needed for cleaning.

3. The method for managing membrane cleaning process as claimed in Claim 2, wherein the optimization is performed considering the cost of chemicals or/and cost related to production loss during plant down time.

4. The method for managing membrane cleaning process as claimed in Claim 1, wherein the controlled time needed for cleaning is determined using a function for concentration of salts in the chemical liquor.

5. The method for managing membrane cleaning process as claimed in Claim 4, wherein the function for concentration of salts in the chemical liquor is obtained with Residence Time Distribution studies.

6. A system (100) for managing reverse osmosis (RO) membrane cleaning process in a plant performing desalination or waste water treatment by operating a RO membrane cleaning process for a controlled time for cleaning and with a controlled value of cleaning chemical concentration in chemical liquor prepared for cleaning the RO membrane (110), the system (100) comprising of:

   a. A membrane performance tool (140) to obtain the RO membrane fouling status using a mathematical or data model based on physical phenomenon or/and plant parameters;
   b. One or more sensors (150) to obtain salt concentration information in the chemical liquor; and
   c. An automation block (160) to administer concentration of cleaning chemical in the chemical liquor, wherein the automation block (160) to administer addition of fresh cleaning chemicals to the chemical liquor has an optimizer to compute optimal value of cleaning chemical concentration and optimal time needed for cleaning; and

   is adapted to recirculate the chemical liquor through the fouled RO membrane (110) during the cleaning time without regular feed input.

7. The system (100) for managing membrane cleaning process as claimed in Claim 6, wherein the automation block (160) administers addition of fresh chemical to the chemical liquor through one or more control valves (130) controlling the flow of circulated chemical liquor and the flow of fresh chemical into the chemical liquor.

**Patentansprüche**

1. Verfahren zum Verwalten eines Umkehrosmose(RO)-Membranreinigungsprozesses in einer Anlage, die eine Entsalzung oder Abwasseraufbereitung durchführt, durch Betreiben des Umkehrosmose-Membranreinigungsprozesses für eine kontrollierte Zeit zum Reinigen und mit einem kontrollierten Wert der Chemikalienkonzentration in einer chemischen Flüssigkeit, die zum Reinigen einer RO-Membran hergestellt wurde, wobei das Verfahren Folgendes umfasst:

   a) Abschätzen eines Verschmutzungszustands der RO-Membran, wobei das Abschätzen des Verschmutzungszustands der RO-Membran unter Verwendung eines mathematischen Modells oder Datenmodells auf Grundlage von einem physikalischen Phänomen oder/und Anlagenparametern durchgeführt wird; und
   b) Bestimmen des kontrollierten Werts der chemischen Konzentration und der zur Reinigung erforderlichen kontrollierten Zeit auf Grundlage des Verschmutzungszustands der RO-Membran, wobei der Wert der Chemikalienkonzentration und die zur Reinigung erforderliche Zeit auf Grundlage des Verschmutzungszustands der RO-Membran unter Verwendung von Optimierungstechniken für einen kostengünstigen und effizienten Betrieb der Anlage bestimmt werden;

   wobei die chemische Flüssigkeit während der Reinigungszeit ohne regelmäßigen Zustromeinlass durch die verschmutzte RO-Membran rezirkuliert wird.

2. Verfahren zum Verwalten eines Membranreinigungsprozesses nach Anspruch 1, wobei der kontrollierte Wert der Chemikalienkonzentration angewandt wird, um eine optimale Verwendung von Chemikalien und die optimale zur Reinigung erforderliche Zeit bereitzustellen.

3. Verfahren zum Verwalten eines Membranreinigungsprozesses nach Anspruch 2, wobei die Optimierung unter Berücksichtigung der Kosten von Chemikalien oder/und Kosten, die mit einem Produktionsverlust während einer Anlagenstillstandszeit in Beziehung stehen, durchgeführt wird.

4. Verfahren zum Verwalten eines Membranreinigungsprozesses nach Anspruch 1, wobei die kontrollierte zur Reinigung erforderliche Zeit unter Verwendung einer Funktion für die Konzentration der Salze in der chemischen Flüssigkeit bestimmt wird.

5. Verfahren zum Verwalten eines Membranreinigungsprozesses nach Anspruch 4, wobei die Funktion für die Konzentration von Salzen in der chemischen Flüssigkeit mithilfe von Verweilzeitverteilungsstudien erhalten wird.

6. System (100) zum Verwalten eines Umkehrosmose(RO)-Membranreinigungsprozesses in einer Anlage, die eine Entsalzung oder Abwasseraufbereitung durchführt, durch Betreiben eines RO-Membranreinigungsprozesses für eine kontrollierte Zeit zum Reinigen und mit einem kontrollierten Wert der Chemikalienkonzentration zum Reinigen in einer chemischen Flüssigkeit, die zum Reinigen der RO-Membran (110) hergestellt wurde, wobei das System (100) Folgendes umfasst:

   a. ein Membranleistungswerkzeug (140), um den RO-Membranverschmutzungszustand unter Verwendung eines mathematischen Modells oder Datenmodells auf Grundlage von einem physikalischen Phänomen oder/und Anlagenparametern zu erhalten;
   b. einen oder mehrere Sensoren (150), um Salzkonzentrationsinformationen in der chemischen Flüssigkeit zu erhalten; und
   c. einen Automatisierungsblock (160) zum Anwenden der Konzentration der Reinigungschemikalie auf die chemischen Flüssigkeit, wobei der Automatisierungsblock (160) eine Optimierungseinrichtung zum zusätzlichen Anwenden von frischen Reinigungschemikalien auf die chemische Flüssigkeit aufweist, um einen optimalen Wert der Reinigungschemikalienkonzentration und eine optimale zur Reinigung erforderliche Zeit zu berechnen;

   und angepasst ist, um die chemische Flüssigkeit während der Reinigungszeit ohne regelmäßigen Zustromeinlass durch die verschmutzte RO-Membran (110) zu rezirkulieren.

7. System (100) zum Verwalten eines Membranreinigungsprozesses nach Anspruch 6, wobei der Automatisierungsblock (160) der chemischen Flüssigkeit eine zusätzliche frische Chemikalie durch ein oder mehrere Steuerventile (130) anwendet, die den Strom der zirkulierten chemischen Flüssigkeit und den Strom der frischen Chemikalie in die chemische Flüssigkeit steuern.


**Revendications**

1. Procédé de gestion d'un processus de nettoyage d'une membrane d'osmose inverse (RO) dans une installation effectuant un dessalement ou une réutilisation de l'eau résiduaire par mise en oeuvre du processus de nettoyage de membrane d'osmose inverse pendant un temps contrôlé pour un nettoyage et avec une valeur contrôlée de concentration de produit chimique dans une liqueur chimique préparée pour nettoyer une membrane RO, le procédé comprenant de :

   a) L'évaluation de l'état d'encrassement de la membrane RO, dans lequel l'évaluation de l'état d'encrassement de la membrane RO est effectuée en utilisant un modèle mathématique ou un modèle de données basé sur un phénomène physique ou/et des paramètres de l'installation ; et
   b) La détermination de la valeur contrôlée de concentration de produit chimique et du temps contrôlé nécessaires au nettoyage sur la base de l'état d'encrassement de la membrane RO, dans lequel la valeur de concentration de produits chimiques et le temps nécessaires au nettoyage sur la base de l'état d'encrassement de la membrane RO sont déterminés en utilisant des techniques d'optimisation pour un fonctionnement rentable et efficace de l'installation ;

   dans lequel la liqueur chimique est recirculée à travers la membrane RO encrassée pendant le temps de nettoyage sans entrée d'alimentation régulière.

2. Procédé de gestion d'un processus de nettoyage de membrane selon la revendication 1, dans lequel la valeur contrôlée de la concentration chimique est administrée pour fournir une utilisation optimale de produits chimiques et un temps optimal nécessaire au nettoyage.

3. Procédé de gestion d'un processus de nettoyage de membrane selon la revendication 2, dans lequel l'optimisation est effectuée en prenant en compte le coût des produits chimiques ou/et le coût lié à la perte de production durant le temps d'arrêt de l'installation.

4. Procédé de gestion d'un processus de nettoyage de membrane selon la revendication 1, dans lequel le temps contrôlé nécessaire au nettoyage est déterminé en utilisant une fonction de concentration de sels dans la liqueur chimique.

5. Procédé de gestion d'un processus de nettoyage de membrane selon la revendication 4, dans lequel la fonction de concentration de sels dans la liqueur chimique est obtenue avec des études de distribution de temps de séjour.

6. Système (100) de gestion d'un processus de nettoyage de membrane d'osmose inverse (RO) dans une installation effectuant un dessalement ou un traitement de l'eau résiduaire par la mise en oeuvre d'un processus de nettoyage de membrane RO pendant un temps contrôlé pour le nettoyage et avec une valeur contrôlée de concentration de produit chimique de nettoyage dans une liqueur chimique préparée pour le nettoyage de la membrane RO (110), le système (100) comprenant de :

   a. Un outil de performance de membrane (140) pour obtenir l'état d'encrassement de la membrane RO en utilisant un modèle mathématique ou un modèle de données basé sur un phénomène physique ou/et des paramètres de l'installation ;
   b. Un ou plusieurs capteurs (150) pour obtenir des informations sur la concentration du sel dans la liqueur chimique ; et
   c. Un bloc d'automatisation (160) pour administrer une concentration de produit chimique de nettoyage dans la liqueur chimique, dans lequel le bloc d'automatisation (160) pour administrer l'addition de produits chimiques de nettoyage frais à la liqueur chimique a un optimiseur pour calculer une valeur optimale de concentration de produit chimique de nettoyage et un temps optimal nécessaire au nettoyage ;

   et est adapté pour recirculer la liqueur chimique à travers la membrane RO encrassée (110) pendant le temps de nettoyage sans entrée d'alimentation régulière.

7. Système (100) de gestion d'un processus de nettoyage de membrane selon la revendication 6, dans lequel le bloc d'automatisation (160) administre l'addition de produit chimique frais à la liqueur chimique à travers une ou plusieurs vannes de commande (130) commandant le flux de liqueur chimique circulée et le flux de produit chimique frais dans la liqueur chimique.

Figure 1

Figure 2

**Plant Database**
•Chemical concentration,
•feed, permeate and reject side measurements

160

**Cleaning Automation block**

310

Membrane Cleaning, Fouling State, Cost Model

320

$F_{in}(t)$, $C_{in}$, $Q_{in}$, $t_l$     Obj value

Optimizer

**User Inputs**
•Cleaning time by membrane manufacture
•Initial chemical concentration
•Product water cost
•Weights for terms in objective function

**Output**
•Optimal chemical flow profile,
•chemical concentration
•cleaning time

300

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6161435 A
- WO 2009083670 A
- WO 2008120978 A
- EP 1952879 A

**Non-patent literature cited in the description**

- Sodium chloride stimulus-response experiments in spiral wound reverse osmosis membranes: a new method to detect fouling. **ROTH E et al.** DESALINATION. ELSEVIER, 12 March 1999, vol. 121, 183-193